(19) Europäisches Patentamt
European Patent Office
Office européen des brevets

(11) **EP 4 184 756 A1**

(12) **EUROPEAN PATENT APPLICATION**
published in accordance with Art. 153(4) EPC

(43) Date of publication:
**24.05.2023 Bulletin 2023/21**

(21) Application number: **21922214.8**

(22) Date of filing: **19.07.2021**

(51) International Patent Classification (IPC):
**H02K 1/22** (2006.01)   **H02K 1/27** (2022.01)
**H02K 1/28** (2006.01)

(52) Cooperative Patent Classification (CPC):
**H02K 1/22; H02K 1/27; H02K 1/28**

(86) International application number:
**PCT/CN2021/107044**

(87) International publication number:
**WO 2022/160617 (04.08.2022 Gazette 2022/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 29.01.2021  CN 202110122976
29.01.2021  CN 202120251257 U

(71) Applicants:
• **Anhui Welling Auto Parts Co., Ltd.**
**Hefei, Anhui 230031 (CN)**

• **Guangdong Welling Auto Parts Co., Ltd.**
**Foshan, Guangdong 528311 (CN)**

(72) Inventors:
• **WANG, Fei**
**Hefei, Anhui 230031 (CN)**
• **WANG, Pan**
**Hefei, Anhui 230031 (CN)**
• **GU, Zhengyong**
**Hefei, Anhui 230031 (CN)**
• **YANG, Linlin**
**Hefei, Anhui 230031 (CN)**

(74) Representative: **RGTH**
**Patentanwälte PartGmbB**
**Neuer Wall 10**
**20354 Hamburg (DE)**

(54) **ROTOR PUNCHING SHEET, ROTOR IRON CORE, ROTOR, ELECTRIC MOTOR, AND VEHICLE**

(57)     Provided are a rotor punching sheet, a rotor iron core, a rotor, an electric motor, and a vehicle. The rotor punching sheet includes a punching sheet body, a shaft hole and a plurality of slot groups, andthe shaft hole is provided in the punching sheet body; the plurality of slot groups are provided in the punching sheet body; each slot group includes at least one magnetic slot; each magnetic slot includes two magnet slots; and each magnet slot includes a first slot end and a second slot end, which are on the axial end face, the first slot end being disposed closer to the shaft hole than the second slot end. A peripheral edge of the punching sheet body includes a peripheral section on the axial end face, the peripheral sec- tion includes a plurality of arc-shaped sections connected to each other and corresponding to the plurality of slot groups, and each arc-shaped section includes a first cir- cular arc section concentric with the shaft hole, and a second circular arc section eccentric from the shaft hole. According to the present application, the combination of the first circular arc section and the second circular arc section can, on the basis of ensuring an output torque of an electric motor, effectively improve the sinusoidal de- gree of an air-gap magnetic field, reduce harmonic waves, decrease the torque pulsation of the electric mo- tor, and solve the problem of vibration noise.

EP 4 184 756 A1

FIG. 1

**EP 4 184 756 A1**

## Description

This application claims priority to Chinese patent application No. 202110122976.6, filed on January 29, 2021, entitled "Rotor Punching Sheet, Rotor Iron Core, Rotor, Electric Motor and Vehicle", and Chinese patent application No. 202120251257.X, filed on January 29, 2021, entitled "Rotor Punching Sheet, Rotor Iron Core, Rotor, Electric Motor and Vehicle", with the China Patent Office of the China Intellectual Property Administration, which are incorporated herein by reference in their entireties.

## FIELD

The present application relates to the technical field of electric motor equipment, and more particularly, to a rotor punching sheet, a rotor iron core, a rotor, an electric motor, and a vehicle.

## BACKGROUND

In the prior art, rotor components of a built-in permanent magnet electric motor comprise a rotor punching sheet. As a key component of a rotor, the rotor punching sheet should be properly designed because it directly determines the performance of an electric motor. Otherwise, an improper design of the rotor punching sheet leads to more harmonic waves in the air-gap magnetic field of the electric motor and a serious distortion, which results in high torque pulsation and too much vibration noise. Therefore, how to properly design the rotor to improve the performance of the electric motor is an urgent problem to be solved.

## SUMMARY

It is an object of the present application to solve at least one of the technical problems existing in the prior art or related art.

To this end, in a first aspect of the present application, a rotor punching sheet is provided.

In a second aspect of the present application, a rotor iron core is provided.

In a third aspect of the present application, a rotor is provided.

In a fourth aspect of the present application, an electric motor is provided.

In a fifth aspect of the present application, a vehicle is provided.

In view of the above, the rotor punching sheet provided in the first aspect of the present application comprises a punching sheet body, a shaft hole, and a plurality of slot groups, where the shaft hole is provided on the punching sheet body. The plurality of slot groups are provided on the punching sheet body, each of the a plurality of slot group comprises at least one magnetic slot, each magnetic slot comprises two magnet slots, each magnet slot comprises a first slot end and a second slot end on an axial end face, and the first slot end is arranged closer to the shaft hole than the second slot end. Herein, a peripheral edge of the punching sheet body comprises a peripheral section on the axial end face, the peripheral section comprises a plurality of connected arc-shaped sections corresponding to the plurality of slot groups, each arc-shaped section comprises a first circular arc section concentric with the shaft hole and a second circular arc section eccentric with the shaft hole.

The rotor punching sheet provided herein comprises the punching sheet body, the shaft hole, and the plurality of slot groups. The shaft hole is provided on the punching sheet body, and the punching sheet body is a magnetic steel body. The shaft hole is configured to fit the rotating shaft of the rotor. The plurality of slot groups are arranged on the punching sheet body about the shaft hole. It is to be noted that all or some of a plurality of installations may have the same structure, which may be varied as appropriate. Each slot group comprises at least one magnetic slot, each magnetic slot comprises two magnet slots, and each magnet slot is configured to install a permanent magnet of a rotor; each magnet slot comprises the first slot end and the second slot end on the axial end face, and the first slot end is arranged closer to the shaft hole than the second slot end. When a distance between the first slot ends of the two magnet slots and a distance between the second slot ends of the two magnet slots are not equal, the two magnet slots are arranged in a V-shape on the punching sheet body. The openings of the two magnet slots in the V-shaped arrangement are opposite the shaft hole. Further, the peripheral edge of the punching sheet body comprises the peripheral section on the axial end face, the peripheral section being a segment with definite endpoints. The outer peripheral section comprises a plurality of connected arc-shaped sections, one arc-shaped section corresponding to one slot group; it is to be noted that the number of the arc-shaped sections and the number of the slot groups are equal to the number of magnetic poles of the electric motor. By configuring that each arc-shaped section comprises at least the first circular arc section concentric with the shaft hole and the second circular arc section eccentric with the shaft hole, an unequal air gap periodically varying along a circumferential direction can be formed between an outer circumference circle of the rotor and an inner circumference circle of the stator for the electric motor, and accordingly, a left arc section, the first circular arc section,

3

and then a right arc section can alternate on an outer circumference circle of the rotor punching sheet and then the operation of the electric motor can be more stable. Moreover, the distribution of a magnetic field of the rotor is optimized, and a Q-axis and D-axis armature reaction is effectively weakened, which effectively addresses the problem of the torque pulsation of the electric motor while keeping a peak torque of the electric motor unchanged; as such, the vibration noise of the electric motor in operation is reduced, rendering a better user experience. In addition, the stator and the rotor of the electric motor suffer from less iron loss, which is beneficial to improve the efficiency of the electric motor. Furthermore, the combination of the first circular arc section and the second circular arc section takes into account the advantages of both a full-circle design and a completely eccentric design of the rotor punching sheet. With an average length of the air gap of the electric motor unchanged and the peak torque of the electric motor unchanged, an air-gap magnetic field is effectively improved and then an air-gap magnetic density and a sinusoidal degree of a counter electromotive force waveform are increased; a proportion of harmonic waves is reduced, for reducing the torque pulsation, and significantly reducing the vibration noise of the electric motor. In the present application, at least one V-shaped magnetic slot is correspondingly provided at each magnetic pole of the electric motor, and each arc-shaped section at least comprises the concentric first circular arc section and the eccentric second circular arc section; as such, an overall structural layout of the rotor punching sheet is more reasonable, and the distribution of the air-gap magnetic density of the electric motor can be effectively improved on the basis of ensuring an output torque of the electric motor, which reduces the proportion of harmonic waves for the electric motor; accordingly, the problem of the torque pulsation and vibration noise of the electric motor can be solved, and a design of an electric motor with excellent performance can be achieved.

In an optional design, further, either of the two magnet slots comprises a straight slot section connected between the first slot end and the second slot end and closer to another of the two magnet slots, the straight slot section comprises a distal end away from the shaft hole, lines connecting the distal ends of the two magnet slots to a center of the shaft hole, form a polar arc angle $\alpha$, and a central angle of the first circular arc section is $\beta$, and $0.35 \leq \dfrac{\beta}{\alpha} \leq 1$.

In this design, for the two magnet slots in one magnetic slot, either of the magnet slots comprises two straight sections connected between the first slot end and the second slot end, with one of the two straight sections closer to the other magnet slot being the straight slot section. That is to say, the two magnet slots comprise a first magnet slot and a second magnet slot, where the first magnet slot comprises a straight slot section facing the second magnet slot, the second magnet slot comprises a straight slot section facing the first magnet slot, either straight slot section comprises a distal end away from the shaft hole, and an comprised angle formed by lines connecting the distal ends of the first magnet slot and the second magnet slot to the center of the shaft hole, respectively, is the polar arc angle $\alpha$.

Furthermore, a center of a circle on which the first circular arc section is located coincides with the center of the shaft hole, and the central angle $\beta$ corresponding to the first circular arc section refers to an comprised angle between lines connecting two endpoints of the first circular arc section to the center of the shaft hole, respectively. In some embodiments, a line connecting an endpoint of the first circular arc section to the center of the shaft hole is denoted as a first connection line, a line connecting the other endpoint of the first circular arc section to the center of the shaft hole is denoted as a second connection line, and an comprised angle between the first connection line and the second connection line is the central angle $\beta$.

Furthermore, a ratio of polar arc angle $\alpha$ to the central angle $\beta$ has a great influence on the peak torque, torque pulsation and air-gap magnetic field of the electric motor. When $\beta/\alpha$ is smaller, a waveform distortion rate of the air-gap magnetic field of the electric motor is smaller, and the torque pulsation is lower, but the torque and power of the electric motor are lower, too. When $\beta/\alpha$ is larger, the waveform distortion of the air-gap magnetic field is greater, and the torque pulsation of the electric motor is higher. Therefore, a proper value of $\beta/\alpha$ plays an important role in the performance of the electric motor. By defining $\beta/\alpha$ in the above range, optimization of many aspects such as the torque, torque pulsation, and air gap harmonic wave of the electric motor can be achieved. Without changing the torque of the electric motor, the proportion of the harmonic waves can be effectively reduced, and the problem of the torque pulsation can be addressed for the electric motor.

In an optional design, furthermore, the number of the second circular arc sections is two, and the two second circular arc sections are connected on two sides of the first circular arc section, respectively.

In this design, the two second circular arc sections are connected on two sides of the first circular arc section, respectively. In some embodiments, the two second circular arc sections comprise the left arc section and the right arc section, that is, for one magnetic pole of the electric motor, the arc-shaped sections comprise the left arc section, the first circular arc section, and the right arc section that are connected in sequence. Considering adjacent magnetic poles, the left arc section of a magnetic pole is connected to the right arc section of an adjacent magnetic pole, and the right arc section of a magnetic pole is connected to the left arc section of an adjacent magnetic pole. Furthermore, a center of the second circular arc section does not coincide with the center of the shaft hole, that is to say, the peripheral edge of the punching sheet body is formed by combining the first circular arc section concentric with the center of the shaft hole and the second circular arc section eccentric with the center of the shaft hole; therefore, an unequal air gap periodically varying along a circumferential direction can be formed between an outer circumference circle of the rotor and an inner circumference circle of the stator for the electric motor, and accordingly, the left arc section, the first circular arc section, and then the right arc section can alternate on an outer circumference circle of the rotor punching sheet and then the operation of the electric motor can be more stable. Moreover, the distribution of a magnetic field of the rotor is optimized, and a Q-axis and D-axis armature reaction is effectively weakened, which effectively addresses the problem of the torque pulsation of the electric motor while keeping a peak torque of the electric motor unchanged; as such, the vibration noise of the electric motor in operation is reduced, rendering a better user experience. In addition, the stator and the rotor of the electric motor suffer from less iron loss, which is beneficial to improve the efficiency of the electric motor. Furthermore, the combination of the first circular arc section and the second circular arc section takes into account the advantages of both a full-circle design and a completely eccentric design of the rotor punching sheet. With an average length of the air gap of the electric motor unchanged and the peak torque of the electric motor unchanged, an air-gap magnetic field is effectively improved and then an air-gap magnetic density and a sinusoidal degree of a counter electromotive force waveform are increased; a proportion of harmonic waves is reduced, for reducing the torque pulsation, and significantly reducing the vibration noise of the electric motor.

In an optional design, furthermore, the second circular arc section comprises at least one eccentric circular arc section.

In this design, each second circular arc section comprises at least one eccentric circular arc section. In the case that the second circular arc section comprises one eccentric circular arc section, the arc-shaped section comprises one first circular arc section and two eccentric circular arc sections for one magnetic pole of the electric motor. In the case that the second circular arc section comprises two eccentric circular arc sections, the arc-shaped section comprises one first circular arc section and four eccentric circular arc sections for one magnetic pole of the electric motor. That is to say, the number of the circular arc sections in the arc-shaped section may be three, five, seven, etc. In the case of multiple eccentric circular arc sections, for one arc-shaped section, multiple varying unequal air gaps can be formed between the outer circumference circle of the rotor of the rotor punching sheet and the inner circumference circle of the stator, which is beneficial to the stable operation of the electric motor. Moreover, the distribution of the magnetic field of a rotor with the rotor punching sheet is optimized, and the Q-axis and D-axis armature reaction is effectively weakened, which effectively addresses the problem of the torque pulsation of the electric motor while keeping the peak torque of the electric motor unchanged; as such, the vibration noise of the electric motor in operation is reduced, rendering a better user experience.

In an optional design, furthermore, the number of the at least one magnetic slot is two, the first slot ends of the two magnet slots of each magnetic slot are close to each other, and the second slot ends of the two magnet slots of each magnetic slot are away from each other; the two magnetic slots comprise a first magnetic slot and a second magnetic slot, the first magnetic slot is arranged closer to the shaft hole than the second magnetic slot, and the second magnetic slot forms the polar arc angle $\alpha$, where the first magnetic slot and the second magnetic slot are symmetrical with respect to a center line of a magnetic pole where they are.

In this design, for one magnetic pole of the electric motor, the slot group comprises two magnetic slots, the first slot ends of the two magnet slots in each magnetic slot are close to each other, and the second slot ends of the two magnet slots in each magnetic slot are away from each other, that is, the two magnetic slots are both V-shaped slots, and slot openings of the V-shaped slots formed by the two magnet slots in each magnetic slot all face the peripheral edge of the punching sheet body, i.e., opposite the shaft hole. Furthermore, the two magnetic slots comprise the first magnetic slot and the second magnetic slot, and the first magnetic slot is arranged closer to the shaft hole than the second magnetic slot, that is, the first slot end of the magnet slot in the second magnetic slot is arranged closer to the shaft hole than the first slot end of the magnet slot in the second magnetic slot. It is to be noted that in the case that the number of magnetic slots is two, the polar arc angle $\alpha$ mentioned in the foregoing design refers to an angle formed by the two magnet slots of the second magnetic slot. That is to say, the two magnet slots of the second magnetic slot comprise the first magnet slot and the second magnet slot, the first magnet slot comprises a straight slot section facing the second magnet slot, the second magnet slot comprises a straight slot section facing the first magnet slot, either straight slot section comprises a distal end away from the shaft hole, and an comprised angle formed by lines connecting the distal ends of the first magnet slot and the second magnet slot to the center of the shaft hole, respectively, is the polar arc angle $\alpha$. Furthermore, the first magnetic slot and the second magnetic slot are symmetrical with respect to a center line of a magnetic pole where they areand then the electric motor having the rotor punching sheet can be simply constructed, easily manufactured, and produced with low costs.

In an optional design, furthermore, an comprised angle formed by extension lines of the straight slot sections of the two magnet slots in the first magnetic slot is a first opening angle, an comprised angle formed by the extension lines of the straight slot sections of the two magnet slots in the second magnetic slot is a second opening angle, and the first opening angle is not equal to the second opening angle.

In this design, the comprised angle formed by the extension lines of the straight slot sections of the two magnet slots in the first magnetic slot is the first opening angle, the comprised angle formed by the extension lines of the straight slot sections of the two magnet slots in the second magnetic slot is the second opening angle, and the first opening angle is not equal to the second opening angle; as such, the magnetic field strength under each magnetic pole is better increased for magnetism gathering, and a ratio of the Q-axis inductance to the D-axis inductance of the electric motor is further increased with the increase the output torque of the electric motor, for increasing a reluctance torque component, and improving a field-weakening speed expansion capability of the electric motor. In some embodiments, the first opening angle is larger than the second opening angle, or the first opening angle is smaller than the second opening angle.

In an optional design, furthermore, the first opening angle is smaller than the second opening angle.

In this design, the first opening angle of the first magnetic slot closer to the shaft hole is smaller than the second opening angle of the second magnetic slot away from the shaft hole; as such, the magnetic field strength under each magnetic pole is better increased for magnetism gathering, and the ratio of the Q-axis inductance to the D-axis inductance of the electric motor is further increased with the increase the output torque of the electric motor, for increasing the reluctance torque component, and improving the field-weakening speed expansion capability of the electric motor.

In an optional design, furthermore, the first circular arc section is symmetrical with respect to the center line of the magnetic pole where it is. The two second circular arc sections are symmetrical with respect to the center line of the magnetic pole where they are.

In this design, the first circular arc section is symmetrical with respect to the center line of the magnetic pole where it is. The two second circular arc sections are symmetrical with respect to the center line of the magnetic pole where they are. That is to say, each arc-shaped section is symmetrical with respect to the center line of the magnetic pole where it isand then a periodically varying unequal air gap is formed between the peripheral edge composed of a plurality of arc-shaped sections of the whole punching sheet body and the inner peripheral circle of the stator. With an average length of the air gap of the electric motor unchanged and the peak torque of the electric motor unchanged, an air-gap magnetic field is effectively improved and then an air-gap magnetic density and a sinusoidal degree of a counter electromotive force waveform are increased; a proportion of harmonic waves is reduced, for reducing the torque pulsation, and significantly reducing the vibration noise of the electric motor. In addition, by arranging the arc-shaped section to be symmetrical with respect to the center line of the magnetic pole, the rotor punching sheet is less difficult to be processed, and the product yield is improved.

In an optional design, furthermore, lengths of the first circular arc sections of the plurality of arc-shaped sections are equal. Radiuses of circles on which the first circular arc sections of the plurality of arc-shaped sections are located are equal.

In this design, the lengths of the first circular arc sections of the plurality of arc-shaped sections are equal, which can further ensure that there is a periodically varying unequal air gap between the outer circumference circle of the rotor and the inner circumference circle of the stator. With an average length of the air gap of the electric motor unchanged and the peak torque of the electric motor unchanged, an air-gap magnetic field is effectively improved. Furthermore, the radiuses of the circles on which the first circular arc sections of the plurality of arc-shaped sections are located are all equal, that is, the plurality of first circular arc sections are those on one circle. As such, a projection of a maximum outer contour of the rotor punching sheet on the axial end face can be in a regular shape and then the space required for the rotor with the rotor punching sheet during high-speed rotation is relatively regular, that is, in a cylindrical shape, which facilitates the machining preparation of the stator adapted thereto.

In an optional design, furthermore, the center of the second circular arc section is on the punching sheet body.

In this design, the center of the second circular arc section is on the punching sheet body, that is, the second circular arc section projects opposite the shaft hole. In other words, the centers of the first circular arc section and the second circular arc section are both on the punching sheet body, and the first circular arc section and the second circular arc section are bent in a similar trend and then it is more feasible to enable a periodically varying air gap between the outer circumference circle of the rotor and the inner circumference circle of the stator along a circumference, for making the operation of the electric motor to be more stable. Moreover, the distribution of a magnetic field of the rotor is optimized, and a Q-axis and D-axis armature reaction is effectively weakened, which effectively addresses the problem of the torque pulsation of the electric motor while keeping a peak torque of the electric motor unchanged; as such, the vibration noise of the electric motor in operation is reduced, rendering a better user experience.

In an optional design, furthermore, the slot groups comprise an auxiliary slot provided on the peripheral edge of the punching sheet body.

In this design, each slot group has the auxiliary slot, and the auxiliary slot is provided on the peripheral edge of the punching sheet body. The auxiliary slot can effectively reduce the proportion of harmonic waves in the air-gap magnetic field of the electric motor to improve a sinusoidal degree of an air-gap magnetic density waveform, and address the problem of the torque pulsation of the electric motor, which in turn can reduce a radial force caused by the harmonic wave, reduce the running noise of the electric motor, and solve the problem of the vibration noise of the electric motor, for rendering a better user experience. In addition, by providing concave auxiliary slots on the rotor punching sheet in the present application, it is also possible to partially adjust the no-load counter electromotive force waveform and radial force of the electric motor, to reduce a maximum no-load line counter electromotive force of the electric motor. It is to be noted that the torque pulsation of the electric motor largely depends on a non-sinusoidal degree of the air-gap magnetic field, and a larger proportion of harmonic waves in the air-gap magnetic field leads to a worse output torque waveform of the electric motor, in which case, the torque pulsation is higher, and the vibration noise is bigger.

In an optional design, furthermore, the auxiliary slot is provided in plurality, and the plurality of auxiliary slots are arranged at an interval and are symmetrically arranged along the center line of the magnetic pole where they are.

In this design, each slot group comprises a plurality of auxiliary slots, in some embodiments, one slot group may be provided with four auxiliary slots, the plurality of auxiliary slots being arranged at an interval on the punching sheet body. The plurality of auxiliary slots of one slot group are arranged symmetrically along the center line of the magnetic pole, and at least two auxiliary slots are provided and arranged in pairs.

In an optional design, furthermore, the auxiliary slots comprise two first auxiliary slots, and the two first auxiliary slots are arranged symmetrically on the first circular arc section along the center line of the magnetic pole where they are. In addition/in some embodiments, the auxiliary slots further comprise two second auxiliary slots, and the two second auxiliary slots are respectively provided on two second circular arc sections symmetrically along the center line of the magnetic pole where they are.

In this design, the auxiliary slots comprise two first auxiliary slots and two second auxiliary slots, where the two first auxiliary slots are symmetrically arranged on the first circular arc section along the center line of the magnetic pole, the two second auxiliary slots are arranged on the second circular arc section along the center line of the magnetic pole, and the two second auxiliary slots are arranged on two different arc-shaped sections, respectively.

Furthermore, a slot depth of the first auxiliary slot is greater than a slot depth of the second auxiliary slot, that is, in the case of the concentric first circular arc section, the slot depth of the first auxiliary slot is greater, and in the case of the eccentric second circular arc section, the slot depth of the second auxiliary slot is smaller; through the combination of the first auxiliary slot and the second auxiliary slot with different slot depths, it is possible to further reduce the proportion of harmonic waves in the air-gap magnetic field, for improving the sinusoidal degree of the air-gap magnetic density waveform, and addressing the problem of the torque pulsation and the radial force; moreover, the arrangement of the auxiliary slots can also partially adjust the no-load counter electromotive force waveform, to reduce the amplitude of the maximum no-load line counter electromotive force of the electric motor.

In an optional design, the first auxiliary slot further has a slot depth of 0.5mm or more and 0.9mm or less. In addition/in some embodiments, the slot depth of the second auxiliary slot is 0.1mm or more and 0.7mm or less.

In this design, as long as the slot depths of the first auxiliary slot and the second auxiliary slot fall within the above range, a small volume of the auxiliary slot can be ensured with the performance of the electric motor effectively improved by the auxiliary slot, preventing the auxiliary slot from causing a large change in the shape of the peripheral edge of the punching sheet body.

According to the second aspect of the present application, a rotor iron core is provided, comprising the rotor punching sheet provided by any of the above designs, where the rotor punching sheet is provided in plurality, the plurality of rotor punching sheets are stacked, and the plurality of slot groups of the plurality of rotor punching sheets are axially aligned to form a plurality of insertion slots.

The rotor iron core provided by the present application comprises the rotor punching sheet provided by any of the above designs, and thus has all the advantageous effects of the rotor punching sheet, which will not be described in detail herein.

According to the third aspect of the present application, a rotor is provided, comprising the rotor iron core provided by any of the above designs, where the rotor further comprises a plurality of permanent magnets, each of the plurality of permanent magnets being inserted in the plurality of insertion slots.

The rotor provided by the present application comprises the rotor iron core provided by any of the above designs, and thus has all the advantageous effects of the rotor iron core, which will not be described in detail herein.

According to the fourth aspect of the present application, an electric motor is provided, comprising the rotor provided by any of the above designs, where the electric motor further comprises a stator, the stator comprising a mounting cavity extending axially therethrough, the rotor being located within the mounting cavity.

The electric motor provided by the present application comprises the rotor provided by any of the above designs, and thus has all the advantageous effects of the rotor, which will not be described in detail herein.

In an optional design, furthermore, a minimum spacing between an outer peripheral wall of the rotor and an inner peripheral wall of the stator is H1, and a maximum spacing between the outer peripheral wall of the rotor and the inner peripheral wall of the stator is H2, where 0.15 mm≤H2-H1≤0.35 mm.

In this design, the minimum spacing between the outer peripheral wall of the rotor and the inner peripheral wall of the stator is H1. In some embodiments, there is a minimum spacing H1 between a point on the first circular arc section of the rotor punching sheet and the inner peripheral wall of the stator, because the radius of the circle on which the first circular arc section of the rotor punching sheet is located is larger, that is, a distance L1 between a point on the first circular arc section to the center of the shaft hole is larger. The maximum distance between the peripheral wall of the rotor and the inner peripheral wall of the stator is H2. In some embodiments, there is a maximum distance between a point on the second circular arc section of the rotor punching sheet and the inner peripheral wall of the stator, because a distance L2 between a point on the second circular arc section of the rotor punching sheet and the center of the shaft hole is smaller, that is, L2 is smaller than L1. Given that a radius of a projection of the inner peripheral wall of the stator on the axial end face is R (i.e., a radius of an inner circle of the stator), then the minimum spacing H1=R-L1, and the maximum spacing H2=R-L2, hence H2 is greater than H1.

In some embodiments, a difference between H1 and H2 not only directly determines an equivalent air gap length of the electric motor and affects the air-gap magnetic field distribution, but also directly determines a salient pole ratio of the electric motor and affects the peak torque and high-speed performance of the electric motor. In some embodiments, the torque pulsation of the electric motor mainly depends on the 5th, 7th, 11th and 13th harmonic waves of the air-gap magnetic field. In the case of a larger difference between H1 and H2, the air-gap magnetic field waveform is more sinusoidal, a harmonic wave amplitude of the electric motor is smaller, and the torque pulsation is lower, but the peak torque of the electric motor is also lower. The peak torque of the electric motor consists of the reluctance torque component and a permanent magnet torque component, where the permanent magnet torque of the electric motor is proportional to an amount of the permanent magnet, and the reluctance torque is proportional to the saliency ratio. Herein, the saliency ratio is a ratio of the Q-axis inductance to the D-axis inductance and is directly related to the difference between H1 and H2. Under the condition that the amount of the permanent magnet is constant, a proper distribution of the difference between H1 and H2 ensures that the equivalent air gap length of the electric motor keeps unchanged, and the salient ratio of the electric motor does not change, for ensuring that the peak torque of the electric motor does not change. Therefore, a solution allowing for a smaller proportion of harmonic waves, a lower torque pulsation, and better electromagnetic performance can be achieved under the same peak torque.

In an optional design, furthermore, the number of magnetic poles of the electric motor is P, a maximum distance between the center of the shaft hole in the rotor punching sheet of the electric motor and the peripheral edge of the punching sheet body is L1, a minimum distance between the center of the shaft hole and the peripheral edge of the punching sheet body is L2, and a radius of an arc where the center of the second circular arc section of the rotor punching sheet is located is r, where r satisfies the following equation: r=L1-L2.

In this design, the number of magnetic poles of the electric motor is P, the maximum distance between the center of the shaft hole in the rotor punching sheet of the electric motor and the peripheral edge of the punching sheet body is L1, the minimum distance between the center of the shaft hole and the peripheral edge of the punching sheet body is L2, and the radius of the arc where the center of the second circular arc section of the rotor punching sheet is located is r, where r satisfies the above equation. As such, the center of the eccentric circular arc section in the second circular arc section is located in the circle taking the center of the shaft hole as the center and r as the radius. Apparently, the center of the second circular arc section cannot coincide with the center of the shaft hole. By defining a position of the center of the eccentric circular arc section, the combination of the concentric first circular arc section and the eccentric second circular arc section is thus more reasonable, and takes into account the advantages of both a full-circle design and a completely eccentric design of the rotor punching sheet. With an average length of the air gap of the electric motor unchanged and the peak torque of the electric motor unchanged, an air-gap magnetic field is effectively improved and then an air-gap magnetic density and a sinusoidal degree of a counter electromotive force waveform are increased; a proportion of harmonic waves is reduced, for reducing the torque pulsation, and significantly reducing the vibration noise of the electric motor. According to the fifth aspect of the present application, a vehicle is provided, comprising the electric motor provided by any of the above designs.

The vehicle provided by the present application comprises the electric motor provided by any of the above designs, and thus has all the advantageous effects of the electric motor, which will not be described in detail herein. Additional aspects and advantages of the present application will be set forth in part in the detailed description which follows or may be learned by practicing the present application.

## BRIEF DESCRIPTION OF THE DRAWINGS

The foregoing and/or additional aspects and advantages of the present application will become apparent and readily appreciated from the following description of the embodiments, taken in conjunction with the accompanying drawings, in which

FIG. 1 shows a schematic view of a structure of a rotor punching sheet according to an embodiment of the present application;

FIG. 2 shows a schematic view of the structure of the rotor punching sheet according to another embodiment of the present application;

FIG. 3 shows a partially enlarged view at A of the rotor punching sheet shown in FIG. 2 according to an embodiment of the present application;

FIG. 4 shows a schematic view of a structure of an electric motor according to an embodiment of the present application;

FIG. 5 shows a partially enlarged view at B of the electric motor shown in FIG. 4 according to an embodiment of the present application;

FIG. 6 shows a simulated graph of an average torque and a torque pulsation rate of the electric motor as affected by a value of $\beta/\alpha$ according to an embodiment of the present application;

FIG. 7 shows a simulated graph of the average torque and the torque pulsation rate of the electric motor as affected by a value of H2-H1 according to an embodiment of the present application;

FIG. 8 shows a graph of torque pulsations at full speed of an electric motor consisting of a rotor punching sheet of a full-circle design in the related art;

FIG. 9 shows a graph of torque pulsations at full speed of the electric motor according to an embodiment of the present application.

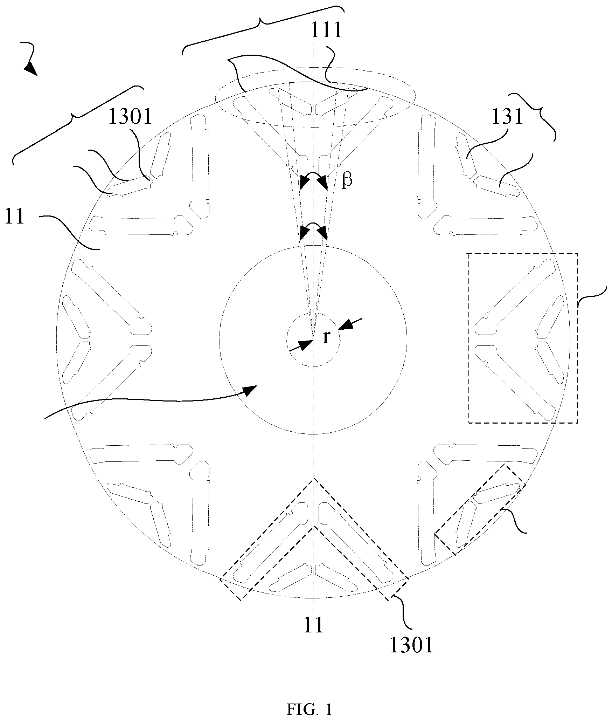

In the drawings, the denotations of the reference signs in FIGS. 1 to 5 are:

10 rotor punching sheet,

11 punching sheet body, 110 arc-shaped section,

111 first circular arc section,

112 second circular arc section, 112a left arc section, 112b right arc section,

12 shaft hole,

13 slot group, 1301 first magnetic slot, 1302 second magnetic slot,

130 magnet slot, 131 first magnet slot, 132 second magnet slot,

1311 first slot end,

1312 second slot end,

1313 straight slot section,

140 auxiliary slot, 141 first auxiliary slot, 142 second auxiliary slot,

20 electric motor,

21 stator.

## DETAILED DESCRIPTION OF THE DISCLOSURE

In order that the above objects, features and advantages of the present application may be more clearly understood, a detailed description of the present application will be provided with reference to embodiments thereof which are illustrated in the appended drawings. It should be noted that the embodiments and features of the embodiments of the present application can be combined with each other without conflict.

In the following description, numerous specific details are set forth in order to provide a thorough understanding of the present application. However, the present application may be practiced otherwise than as in some embodiments described herein. Accordingly, the scope of the present application is not limited by the specific embodiments disclosed below.

A rotor punching sheet 10, a rotor iron core, a rotor, an electric motor 20, and a vehicle provided according to some embodiments of the present application are described below with reference to FIGS. 1 to 9.

Embodiment 1

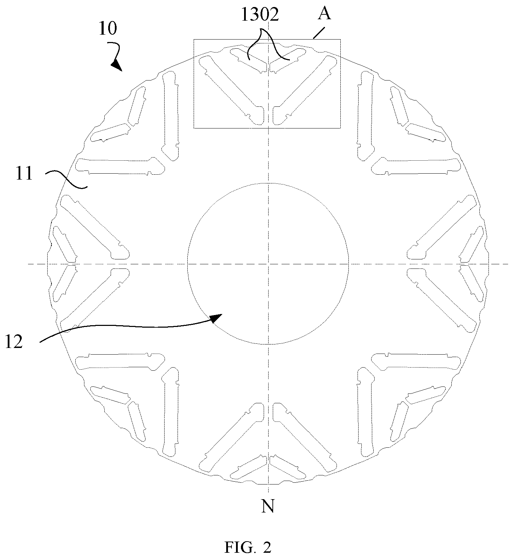

According to a first aspect of the present application, a rotor punching sheet 10 is provided, as shown in FIGS. 1 and 2; the rotor punching sheet 10 comprises a punching sheet body 11, a shaft hole 12, and a plurality of slot groups 13, where the shaft hole 12 is provided on the punching sheet body 11. The plurality of slot groups 13 are provided on the punching sheet body 11, each slot group 13 comprises at least one magnetic slot, each magnetic slot comprises two magnet slots 130, each magnet slot 130 comprises a first slot end 1311 and a second slot end 1312 on an axial end face, and the first slot end 1311 is arranged closer to the shaft hole 12 than the second slot end 1312. Herein, a peripheral edge of the punching sheet body 11 comprises a peripheral section on the axial end face, the peripheral section comprises a plurality of connected arc-shaped sections 110 corresponding to the plurality of slot groups 13, each arc-shaped section 110 comprises a first circular arc section 111 concentric with the shaft hole 12 and a second circular arc section 112 eccentric with the shaft hole 12.

The rotor punching sheet 10 provided herein comprises the punching sheet body 11, the shaft hole 12, and the plurality of slot groups 13. The shaft hole 12 is provided on the punching sheet body 11, and the punching sheet body 11 is a magnetic steel body. The shaft hole 12 is configured to fit the rotating shaft of the rotor. The plurality of slot groups 13 are arranged on the punching sheet body 11 about the shaft hole 12. It is to be noted that all or some of a plurality of installations may have the same structure, which may be varied as appropriate. Each slot group 13 comprises at least one magnetic slot, each magnetic slot comprises two magnet slots 130, and each magnet slot 130 is configured to install a permanent magnet of a rotor; each magnet slot 130 comprises the first slot end 1311 and the second slot end 1312 on the axial end face, and the first slot end 1311 is arranged closer to the shaft hole 12 than the second slot end 1312. When a distance between the first slot ends 1311 of the two magnet slots 130 and a distance between the second slot ends 1312 of the two magnet slots 130 are not equal, the two magnet slots 130 are arranged in a V-shape on the punching sheet body 11. The openings of the two magnet slots 130 in the V-shaped arrangement are opposite the shaft hole 12. Further, the peripheral edge of the punching sheet body 11 comprises the peripheral section on the axial end face, the peripheral section being a segment with definite endpoints. The outer peripheral section comprises a plurality of connected arc-shaped sections 110, one arc-shaped section 110 corresponding to one slot group 13; it is to be noted that the number of the arc-shaped sections 110 and the number of the slot groups 13 are equal to the number of magnetic poles of the electric motor 20. By configuring that each arc-shaped section 110 comprises at least the first circular arc section 111 concentric with the shaft hole 12 and the second circular arc section 112 eccentric with the shaft hole 12, an unequal air gap periodically varying along a circumferential direction can be formed between an outer circumference circle of the rotor and an inner circumference circle of the stator 21 for the electric motor 20, and accordingly, a left arc section 112a, the first circular arc section 111, and then a right arc section 112b can alternate on an outer circumference circle of the rotor punching sheet 10 and then the operation of the electric motor 20 can be more stable. Moreover, the distribution of a magnetic field of the rotor is optimized, and a Q-axis and D-axis armature reaction is effectively weakened, which effectively addresses the problem of the torque pulsation of the electric motor 20 while keeping a peak torque of the electric motor 20 unchanged; as such, the vibration noise of the electric motor 20 in operation is reduced, rendering a better user experience. In addition, the stator 21 and the rotor of the electric motor 20 suffer from less iron loss, which is beneficial to improve the efficiency of the electric motor 20. Furthermore, the combination of the first circular arc section 111 and the second circular arc section 112 takes into account the advantages of both a full-circle design and a completely eccentric design of the rotor punching sheet 10. With an average length of the air gap of the electric motor 20 unchanged and the peak torque of the electric motor 20 unchanged, an air-gap magnetic field is effectively improved and then an air-gap magnetic density and a sinusoidal degree of a counter electromotive force waveform are increased; a proportion of harmonic waves is reduced, for reducing the torque pulsation, and significantly reducing the vibration noise of the electric motor 20. In the present application, at least one V-shaped magnetic slot is correspondingly provided at each magnetic pole of the electric motor 20, and each arc-shaped section 110 at least comprises the concentric first circular arc section 111 and the eccentric second circular arc section 112; as such, an overall structural layout of the rotor punching sheet 10 is more reasonable, and the distribution of the air-gap magnetic density of the electric motor 20 can be effectively improved on the basis of ensuring an output torque of the electric motor 20, which reduces the proportion of harmonic waves for the electric motor 20; accordingly, the problem of the torque pulsation and vibration noise of the electric motor 20 can be solved, and a design of an electric motor 20 with excellent performance can be achieved.

Further, the number of magnetic poles of the electric motor 20 is eight, and the number of the slot groups 13 is eight, each slot group 13 comprising two magnetic slots, each magnetic slot comprising two magnet slots 130. That is, each slot group 13 comprises four magnet slots 130.

Furthermore, as shown in FIG. 1, either of the two magnet slots 130 comprises a straight slot section 1313 connected between the first slot end 1311 and the second slot end 1312 and closer to another of the two magnet slots 130, the straight slot section 1313 comprises a distal end away from the shaft hole 12, lines connecting the distal ends of the two magnet slots 130 to a center of the shaft hole 12, respectively, form a polar arc angle $\alpha$, and a central angle of the first circular arc section 111 is $\beta$, and $0.35 \leq \dfrac{\beta}{\alpha} \leq 1$.

In this design, for the two magnet slots 130 in one magnetic slot, either of the magnet slots 130 comprises two straight sections connected between the first slot end 1311 and the second slot end 1312, with one of the two straight sections closer to the other magnet slot 130 being the straight slot section 1313. That is to say, the two magnet slots 130 comprise a first magnet slot 131 and a second magnet slot 132, where the first magnet slot 131 comprises a straight slot section 1313 facing the second magnet slot 132, the second magnet slot 132 comprises a straight slot section 1313 facing the first magnet slot 131, either straight slot section 1313 comprises a distal end away from the shaft hole 12, and an comprised angle formed by lines connecting the distal ends of the first magnet slot 131 and the second magnet slot 132 to the center of the shaft hole 12, respectively, is the polar arc angle $\alpha$.

Furthermore, a center of a circle on which the first circular arc section 111 is located coincides with the center of the shaft hole 12, and the central angle $\beta$ corresponding to the first circular arc section 111 refers to an comprised angle between lines connecting two endpoints of the first circular arc section 111 to the center of the shaft hole 12, respectively. In some embodiments, a line connecting an endpoint of the first circular arc section 111 to the center of the shaft hole 12 is denoted as a first connection line, a line connecting the other endpoint of the first circular arc section 111 to the center of the shaft hole 12 is denoted as a second connection line, and an comprised angle between the first connection line and the second connection line is the central angle $\beta$.

Furthermore, a ratio of polar arc angle $\alpha$ to the central angle $\beta$ has a great influence on the peak torque, torque pulsation and air-gap magnetic field of the electric motor 20. When $\beta/\alpha$ is smaller, a waveform distortion rate of the air-gap magnetic field of the electric motor 20 is smaller, and the torque pulsation is lower, but the torque and power of the electric motor 20 are lower, too. When $\beta/\alpha$ is larger, the waveform distortion of the air-gap magnetic field is greater, and the torque pulsation of the electric motor 20 is higher. Therefore, a proper value of $\beta/\alpha$ plays an important role in the performance of the electric motor 20. By defining $\beta/\alpha$ in the above range, optimization of many aspects such as the torque, torque pulsation, and air gap harmonic wave of the electric motor 20 can be achieved. Without changing the torque of the electric motor 20, the proportion of the harmonic waves can be effectively reduced, and the problem of the torque pulsation can be addressed for the electric motor 20. In some embodiments, the value of $\beta/\alpha$ may be 0.35, 0.40, 0.45, 0.50, 0.55, 0.60, 0.65, 0.70, 0.75, 0.80, 0.85, 0.90, 0.95, 1.0, etc.

Furthermore, in the two straight sections, one straight section that is away from the other magnet slot 130 is an outer slot section, and an avoidance slot wall is provided between the outer slot section and the first slot end 1311 and/or the second slot end 1312; the permanent magnet is provided in the magnet slot 130 and may contact the avoidance slot wall, and the avoidance slot wall can technically avoid dimensional interference between the magnet slot 130 and the permanent magnet, thus reducing the difficulty in assembling the permanent magnet. It is to be noted that the avoidance slot wall is an arc-shaped wall. The arc-shaped wall may protrude toward the inside of the magnet slot 130 or the outside of the magnet slot 130. It is to be noted that the number of the arc-shaped wall is two, and the two arc-shaped walls are provided on the outer slot section corresponding to both ends of the permanent magnet.

In an optional design, furthermore, the number of the second circular arc section 112 is two, and the two second circular arc sections 112 are connected on two sides of the first circular arc section 111, respectively.

In this design, the two second circular arc sections 112 are connected on two sides of the first circular arc section 111, respectively. In some embodiments, the two second circular arc sections 112 comprise the left arc section 112a and the right arc section 112b, that is, for one magnetic pole of the electric motor 20, the arc-shaped sections 110 comprise the left arc section 112a, the first circular arc section 111, and a right arc section 112b that are connected in sequence. Considering adjacent magnetic poles, the left arc section 112a of a magnetic pole is connected to the right arc section 112b of an adjacent magnetic pole, and the right arc section 112b of a magnetic pole is connected to the left arc section 112a of an adjacent magnetic pole. Furthermore, a center of the second circular arc section 112 does not coincide with the center of the shaft hole 12, that is to say, the peripheral edge of the punching sheet body 11 is formed by combining the first circular arc section 111 concentric with the center of the shaft hole 12 and the second circular arc section 112 eccentric with the center of the shaft hole 12; therefore, an unequal air gap periodically varying along a circumferential direction can be formed between an outer circumference circle of the rotor and an inner circumference circle of the stator 21 for the electric motor 20, and accordingly, the left arc section 112a, the first circular arc section 111, and then the right arc section 112b can alternate on an outer circumference circle of the rotor punching sheet 10 and then the operation of the electric motor 20 can be more stable. Moreover, the distribution of a magnetic field of the rotor is optimized, and a Q-axis and D-axis armature reaction is effectively weakened, which effectively addresses the problem of the torque pulsation of the electric motor 20 while keeping a peak torque of the electric motor 20 unchanged; as such, the vibration noise of the electric motor 20 in operation is reduced, rendering a better user experience. In addition, the stator 21 and the rotor of the electric motor 20 suffer from less iron loss, which is beneficial to improve the efficiency of the electric motor 20. Furthermore, the combination of the first circular arc section 111 and the second circular arc section 112 takes into account the advantages of both a full-circle design and a completely eccentric design of the rotor punching sheet 10. With an average length of the air gap of the electric motor 20 unchanged and the peak torque of the electric motor 20 unchanged, an air-gap magnetic field is effectively improved and then an air-gap magnetic density and a sinusoidal degree of a counter electromotive force waveform are increased; a proportion of harmonic waves is reduced, for reducing the torque pulsation, and significantly reducing the vibration noise of the electric motor 20.

Furthermore, as shown in FIGS. 1, 2, and 5, the second circular arc section 112 comprises at least one eccentric circular arc section.

In this design, each second circular arc section 112 comprises at least one eccentric circular arc section. In the case that the second circular arc section 112 comprises one eccentric circular arc section, the arc-shaped section 110 comprises one first circular arc section 111 and two eccentric circular arc sections for one magnetic pole of the electric motor 20. In the case that the second circular arc section 112 comprises two eccentric circular arc sections, the arc-shaped section 110 comprises one first circular arc section 111 and four eccentric circular arc sections for one magnetic pole of the electric motor 20. That is to say, the number of the circular arc sections in the arc-shaped section 110 may be three, five, seven, etc. In the case of multiple eccentric circular arc sections, for one arc-shaped section 110, multiple varying unequal air gaps can be formed between the outer circumference circle of the rotor of the rotor punching sheet 10 and the inner circumference circle of the stator 21, which is beneficial to the stable operation of the electric motor 20. Moreover, the distribution of the magnetic field of a rotor with the rotor punching sheet 10 is optimized, and the Q-axis and D-axis armature reaction is effectively weakened, which effectively addresses the problem of the torque pulsation of the electric motor while keeping the peak torque of the electric motor 20 unchanged; as such, the vibration noise of the electric motor 20 in operation is reduced, rendering a better user experience.

Embodiment 2

On the basis of the foregoing embodiment, the specific structure of each magnetic slot is described in this embodiment. Furthermore, as shown in FIGS. 1, 2, 3, 4, and 5, the number of the at least one magnetic slot is two, the first slot ends 1311 of the two magnet slots 130 of each magnetic slot are close to each other, and the second slot ends 1312 of the two magnet slots 130 of each magnetic slot are away from each other; the two magnetic slots comprise a first magnetic slot 1301 and a second magnetic slot 1302, where the first magnetic slot 1301 is arranged closer to the shaft hole 12 than the second magnetic slot 1302, and the second magnetic slot 1302 forms the polar arc angle $\alpha$; herein, the first magnetic slot 1301 and the second magnetic slot 1302 are symmetrical with respect to a center line N of a magnetic pole where they are.

In this design, for one magnetic pole of the electric motor 20, the slot group 13 comprises two magnetic slots, the first slot ends 1311 of the two magnet slots 130 in each magnetic slot are close to each other, and the second slot ends 1312 of the two magnet slots 130 in each magnetic slot are away from each other, that is, the two magnetic slots are both V-shaped slots, and slot openings of the V-shaped slots formed by the two magnet slots 130 in each magnetic slot all face the peripheral edge of the punching sheet body 11, i.e., opposite the shaft hole 12. Furthermore, the two magnetic slots comprise the first magnetic slot 1301 and the second magnetic slot 1302, and the first magnetic slot 1301 is arranged closer to the shaft hole 12 than the second magnetic slot 1302, that is, the first slot end 1311 of the magnet slot 130 in the second magnetic slot 1302 is arranged closer to the shaft hole 12 than the first slot end 1311 of the magnet slot 130 in the second magnetic slot 1302. It is to be noted that in the case that the number of magnetic slots is two, the polar arc angle $\alpha$ mentioned in the foregoing design refers to an angle formed by the two magnet slots 130 of the second magnetic slot 1302. That is to say, the two magnet slots 130 of the second magnetic slot 1302 comprise the first magnet slot 131 and the second magnet slot 132, the first magnet slot 131 comprises the straight slot section 1313 facing the second magnet slot 132, the second magnet slot 132 comprises the straight slot section 1313 facing the first magnet slot 131, either straight slot section 1313 comprises a distal end away from the shaft hole 12, and an comprised angle formed by lines connecting the distal ends of the first magnet slot 131 and the second magnet slot 132 to the center of the shaft hole 12, respectively, is the polar arc angle $\alpha$. Furthermore, the first magnetic slot 1301 and the second magnetic slot 1302 are symmetrical with respect to a center line of a magnetic pole where they are and then the electric motor 20 having the rotor punching sheet 10 can be simply constructed, easily manufactured, and produced with low costs.

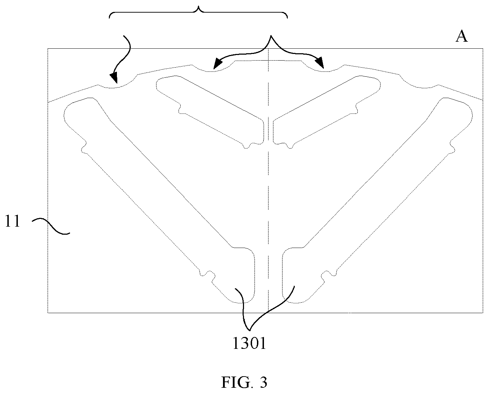

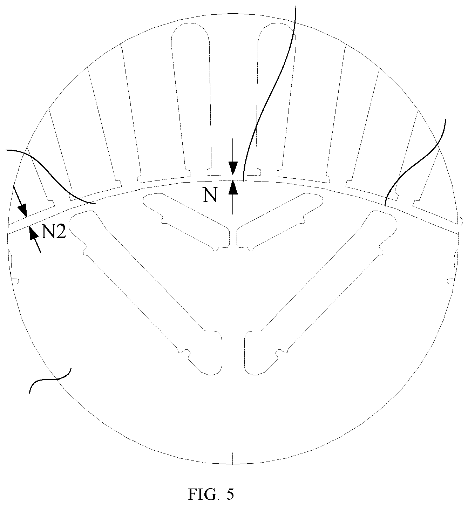

Furthermore, as shown in FIGS. 3 and 5, an comprised angle formed by extension lines of the straight slot sections 1313 of the two magnet slots 130 in the first magnetic slot 1301 is a first opening angle, an comprised angle formed by the extension lines of the straight slot sections 1313 of the two magnet slots 130 in the second magnetic slot 1302 is a second opening angle, and the first opening angle is not equal to the second opening angle.

In this design, the comprised angle formed by the extension lines of the straight slot sections 1313 of the two magnet slots 130 in the first magnetic slot 1301 is the first opening angle, the comprised angle formed by the extension lines of the straight slot sections 1313 of the two magnet slots 130 in the second magnetic slot 1302 is the second opening angle, and the first opening angle is not equal to the second opening angle; as such, the magnetic field strength under each magnetic pole is better increased for magnetism gathering, and a ratio of the Q-axis inductance to the D-axis inductance of the electric motor 20 is further increased with the increase the output torque of the electric motor 20, for increasing a reluctance torque component, and improving a field-weakening speed expansion capability of the electric motor 20. In some embodiments, the first opening angle is larger than the second opening angle, or the first opening angle is smaller than the second opening angle.

Furthermore, as shown in FIGS. 3 and 5, the first opening angle is smaller than the second opening angle.

In this design, the first opening angle of the first magnetic slot 1301 closer to the shaft hole 12 is smaller than the second opening angle of the second magnetic slot 1302 away from the shaft hole 12; as such, the magnetic field strength under each magnetic pole is better increased for magnetism gathering, and the ratio of the Q-axis inductance to the D-axis inductance of the electric motor 20 is further increased with the increase the output torque of the electric motor 20, for increasing the reluctance torque component, and improving the field-weakening speed expansion capability of the electric motor 20.

Embodiment 3

On the basis of the foregoing embodiment, the arrangement and specific structure of the different arc-shaped sections in the arc-shaped section 110 are further described in this embodiment. As shown in FIGS. 3 and 5, furthermore, the first circular arc section 111 is symmetrical with respect to the center line N of the magnetic pole where it is. The two second circular arc sections 112 are symmetrical with respect to the center line N of the magnetic pole where they are.

In this design, the first circular arc section 111 is symmetrical with respect to the center line of the magnetic pole where it is. The two second circular arc sections 112 are symmetrical with respect to the center line of the magnetic pole where they are. That is to say, each arc-shaped section 110 is symmetrical with respect to the center line of the magnetic pole where it isand then a periodically varying unequal air gap is formed between the peripheral edge composed of a plurality of arc-shaped sections 110 of the whole punching sheet body 11 and the inner peripheral circle of the stator 21. With an average length of the air gap of the electric motor 20 unchanged and the peak torque of the electric motor 20 unchanged, an air-gap magnetic field is effectively improved and then an air-gap magnetic density and a sinusoidal degree of a counter electromotive force waveform are increased; a proportion of harmonic waves is reduced, for reducing the torque pulsation, and significantly reducing the vibration noise of the electric motor 20. In addition, by arranging the arc-shaped section 110 to be symmetrical with respect to the center line of the magnetic pole, the rotor punching sheet 10 is less difficult to be processed, and the product yield is improved.

Furthermore, lengths of the first circular arc sections 111 of the plurality of arc-shaped sections 110 are equal. Radiuses of circles on which the first circular arc sections 111 of the plurality of arc-shaped sections 110 are located are equal.

In this design, the lengths of the first circular arc sections 111 of the plurality of arc-shaped sections 110 are equal, which can further ensure that there is a periodically varying unequal air gap between the outer circumference circle of the rotor and the inner circumference circle of the stator 21. With the average length of the air gap of the electric motor 20 unchanged and the peak torque of the electric motor 20 unchanged, an air-gap magnetic field is effectively improved. Furthermore, the radiuses of the circles on which the first circular arc sections 111 of the plurality of arc-shaped sections 110 are located are all equal, that is, the plurality of first circular arc sections 111 are those on one circle. As such, a projection of a maximum outer contour of the rotor punching sheet 10 on the axial end face can be in a regular shape and then the space required for the rotor with the rotor punching sheet 10 during high-speed rotation is relatively regular, that is, in a cylindrical shape, which facilitates the machining preparation of the stator 21 adapted thereto. Furthermore, as shown in FIG. 5, the center of the second circular arc section 112 is located on the punching sheet body 11.

In this design, the center of the second circular arc section 112 is on the punching sheet body 11, that is, the second circular arc section 12 projects opposite the shaft hole 12. In other words, the centers of the first circular arc section 111 and the second circular arc section 112 are both on the punching sheet body 11, and the first circular arc section 111 and the second circular arc section 112 are bent in a similar trend and then it is more feasible to enable a periodically varying air gap between the outer circumference circle of the rotor and the inner circumference circle of the stator 21 along a circumference, for making the operation of the electric motor to be more stable. Moreover, the distribution of a magnetic field of the rotor is optimized, and a Q-axis and D-axis armature reaction is effectively weakened, which effectively addresses the problem of the torque pulsation of the electric motor 20 while keeping a peak torque of the electric motor 20 unchanged; as such, the vibration noise of the electric motor 20 in operation is reduced, rendering a better user experience.

Embodiment 4

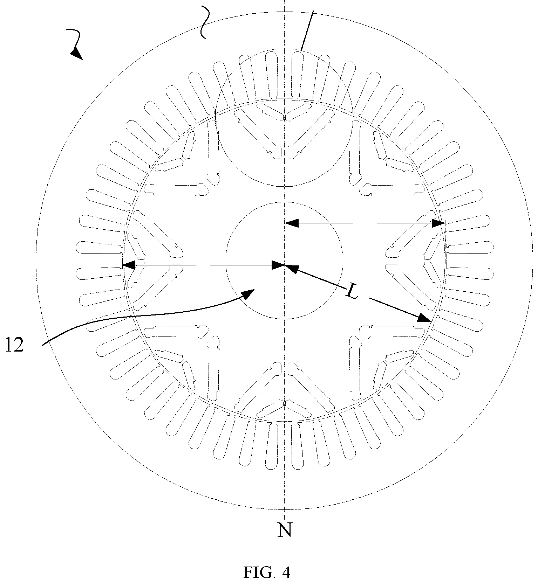

On the basis of the foregoing embodiment, the specific structure of the slot group 13 is further described in this embodiment. As shown in FIGS. 4 and 5, furthermore, the slot group 13 comprises an auxiliary slot 140 provided on the peripheral edge of the punching sheet body 11.

In this design, each slot group 13 has the auxiliary slot 140, and the auxiliary slot 140 is provided on the peripheral edge of the punching sheet body 11. The auxiliary slot 140 can effectively reduce the proportion of harmonic waves in the air-gap magnetic field of the electric motor 20 to improve a sinusoidal degree of an air-gap magnetic density waveform, and address the problem of the torque pulsation of the electric motor 20, which in turn can reduce a radial force caused by the harmonic wave, reduce the running noise of the electric motor 20, and solve the problem of the vibration noise of the electric motor 20, for rendering a better user experience. In addition, by providing concave auxiliary slots 140 on the rotor punching sheet 10 in the present application, it is also possible to partially adjust the no-load counter electromotive force waveform and radial force of the electric motor 20, to reduce a maximum no-load line counter electromotive force of the electric motor 20. It is to be noted that the torque pulsation of the electric motor 20 largely depends on a non-sinusoidal degree of the air-gap magnetic field, and a larger proportion of harmonic waves in the air-gap magnetic field leads to a worse output torque waveform of the electric motor 20, in which case, the torque pulsation is higher, and the vibration noise is bigger.

Furthermore, as shown in FIG. 5, the auxiliary slot 140 is provided in plurality, and the plurality of auxiliary slots 140 are arranged at an interval and are symmetrically arranged along the center line N of the magnetic pole where they are.

In this design, each slot group 13 comprises a plurality of auxiliary slots 140, in some embodiments, one slot group 13 may be provided with four auxiliary slots 140, the plurality of auxiliary slots 140 being arranged at an interval on the punching sheet body 11. The plurality of auxiliary slots 140 of one slot group 13 are arranged symmetrically along the center line of the magnetic pole, and at least two auxiliary slots 140 are provided and arranged in pairs.

Furthermore, as shown in FIG. 5, the auxiliary slot 140 is an arc-shaped slot, in some embodiments, a slot bottom of the auxiliary slot 140 is a circular arc bottom.

Furthermore, the auxiliary slots 140 comprise two first auxiliary slots 141, and the two first auxiliary slots 141 are arranged symmetrically on the first circular arc section 111 along the center line of the magnetic pole where they are. Furthermore, the auxiliary slots comprise two second auxiliary slots 142, and the two second auxiliary slots 142 are respectively provided on two second circular arc sections 112 symmetrically along the center line of the magnetic pole where they are.

In this design, the auxiliary slots 140 comprise two first auxiliary slots 141 and two second auxiliary slots 142, where the two first auxiliary slots 141 are symmetrically arranged on the first circular arc section 111 along the center line of the magnetic pole, the two second auxiliary slots 142 are arranged on the second circular arc section 112 along the center line of the magnetic pole, and the two second auxiliary slots 142 are arranged on two different arc-shaped sections, respectively.

Furthermore, a slot depth of the first auxiliary slot 141 is greater than a slot depth of the second auxiliary slot 142, that is, in the case of the concentric first circular arc section 111, the slot depth of the first auxiliary slot 141 is greater, and in the case of the eccentric second circular arc section 112, the slot depth of the second auxiliary slot 142 is smaller; through the combination of the first auxiliary slot 141 and the second auxiliary slot 142 with different slot depths, it is possible to further reduce the proportion of harmonic waves in the air-gap magnetic field, for improving the sinusoidal degree of the air-gap magnetic density waveform, and addressing the problem of the torque pulsation and the radial force; moreover, the arrangement of the auxiliary slots 140 can also partially adjust the no-load counter electromotive force waveform, to reduce the amplitude of the maximum no-load line counter electromotive force of the electric motor 20.

It is to be noted that the two first auxiliary slots 141 are sized the same, and the two second auxiliary slots 142 are sized the same. In some embodiments, the two first auxiliary slots 141 close to the center line of the magnetic pole can effectively optimize the waveform of the air-gap magnetic density, and improve the sinusoidal degree of the thin air-gap magnetic field, which in turn can reduce the radial electromagnetic force density of the electric motor 20, optimize the torque waveform of the electric motor 20, and reduce the torque pulsation. The two second auxiliary slots 142 away from the center line of the magnetic pole, with respect to the first auxiliary slots 141, can reduce the maximum no-load line counter electromotive force of the electric motor 20 while reducing the torque pulsation of the electric motor 20 and keeping the peak torque of the electric motor 20 unchanged.

In an embodiment, furthermore, the auxiliary slot 140 may comprise only the first auxiliary slot 141, that is, two first auxiliary slots 141 are provided at positions corresponding to the first circular arc section 111, not comprising the second auxiliary slot 142 provided on the second circular arc section 112.

Furthermore, the first auxiliary slot 141 has a slot depth of 0.5mm or more and 0.9mm or less. In addition/in some embodiments, the slot depth of the second auxiliary slot 142 is 0.1mm or more and 0.7mm or less.

In this design, the slot depth of the first auxiliary slot 141 falls within the above range, in some embodiments, the slot depth of the first auxiliary slot 141 may be 0.5 mm, 0.55 mm, 0.60 mm, 0.65 mm, 0.70 mm, 0.75 mm, 0.80 mm, 0.85 mm, 0.90 mm, etc. The slot depth of the second auxiliary slot 142 falls within the above range, in some embodiments, the slot depth of the second auxiliary slot 142 may be 0.1 mm, 0.15 mm, 0.20 mm, 0.25 mm, 0.30 mm, 0.35 mm, 0.40 mm, 0.45 mm, 0.5 mm, 0.55 mm, 0.6 mm, 0.65 mm, 0.7 mm, etc. When the slot depths of the first auxiliary slot 141 and the second auxiliary slot 142 fall within the range defined above, a small volume of the auxiliary slot 140 can be ensured with the performance of the electric motor 20 effectively improved by the auxiliary slot 140, preventing the auxiliary slot 140 from causing a large change in the shape of the peripheral edge of the punching sheet body 11.

Embodiment 5

According to a second aspect of the present application, a rotor iron core is provided, comprising the rotor punching sheet 10 provided by any of the above designs, where the rotor punching sheet 10 is provided in plurality, the plurality of rotor punching sheets 10 are stacked, and the plurality of slot groups 13 of the plurality of rotor punching sheets 10 are axially aligned to form a plurality of insertion slots.

The rotor iron core provided by the present application comprises the rotor punching sheet 10 provided by any of the above designs, and thus has all the advantageous effects of the rotor punching sheet 10, which will not be described in detail herein.

It is to be noted that the rotor punching sheet 10 provided herein comprises the punching sheet body 11, the shaft hole 12, and the plurality of slot groups 13. The shaft hole 12 is provided on the punching sheet body 11, and the punching sheet body 11 is a magnetic steel body. The shaft hole 12 is configured to fit the rotating shaft of the rotor. The plurality of slot groups 13 are arranged on the punching sheet body 11 about the shaft hole 12. It is to be noted that all or some of a plurality of installations may have the same structure, which may be varied as appropriate. Each slot group 13 comprises at least one magnetic slot, each magnetic slot comprises two magnet slots 130, and each magnet slot 130 is configured to install a permanent magnet of a rotor; each magnet slot 130 comprises the first slot end 1311 and the second slot end 1312 on the axial end face, and the first slot end 1311 is arranged closer to the shaft hole 12 than the second slot end 1312. When a distance between the first slot ends 1311 of the two magnet slots 130 and a distance between the second slot ends 1312 of the two magnet slots 130 are not equal, the two magnet slots 130 are arranged in a V-shape on the punching sheet body 11. The openings of the two magnet slots 130 in the V-shaped arrangement are opposite the shaft hole 12. Further, the peripheral edge of the punching sheet body 11 comprises the peripheral section on the axial end face, the peripheral section being a segment with definite endpoints. The outer peripheral section comprises a plurality of connected arc-shaped sections 110, one arc-shaped section 110 corresponding to one slot group 13; it is to be noted that the number of the arc-shaped sections 110 and the number of the slot groups 13 are equal to the number of magnetic poles of the electric motor 20. By configuring that each arc-shaped section 110 comprises at least the first circular arc section 111 concentric with the shaft hole 12, it is possible to make the air gap of the electric motor 20 at a position corresponding to the first circular arc section 111 to be uniform and then the air-gap magnetic density is improved, which avoids a large average air gap due to the outer peripheral section consisting of a completely eccentric circle, significant reduction of the torque and the power of the electric motor 20, and insufficient output of the electric motor 20. In the present application, at least one V-shaped magnetic slot is correspondingly provided at each magnetic pole of the electric motor 20, and each arc-shaped section 110 at least comprises the concentric first circular arc section 111; as such, an overall structural layout of the rotor punching sheet 10 is more reasonable, which can reduce the production cost of the electric motor 20, effectively improve the average air gap of the electric motor 20, and increase the power density of the motor 20 on the basis of ensuring an output torque of the electric motor 20; accordingly, the problem of the torque pulsation of the electric motor 20 can be solved, and a design of an electric motor 20 with excellent performance and low costs can be achieved.

For the two magnet slots 130 in one magnetic slot, either of the magnet slots 130 comprises two straight sections connected between the first slot end 1311 and the second slot end 1312, with one of the two straight sections closer to the other magnet slot 130 being the straight slot section 1313. That is to say, the two magnet slots 130 comprise a first magnet slot 131 and a second magnet slot 132, where the first magnet slot 131 comprises a straight slot section 1313 facing the second magnet slot 132, the second magnet slot 132 comprises a straight slot section 1313 facing the first magnet slot 131, either straight slot section 1313 comprises a distal end away from the shaft hole 12, and an comprised angle formed by lines connecting the distal ends of the first magnet slot 131 and the second magnet slot 132 to the center of the shaft hole 12, respectively, is the polar arc angle $\alpha$.

Furthermore, a center of a circle on which the first circular arc section 111 is located coincides with the center of the shaft hole 12, and the central angle $\beta$ corresponding to the first circular arc section 111 refers to an comprised angle between linesconnecting two endpoints of the first circular arc section 111 to the center of the shaft hole 12, respectively. In some embodiments, a line connectingan endpoint of the first circular arc section 111 to the center of the shaft hole 12 is denoted as a first connection line, a line connecting the other endpoint of the first circular arc section 111 to the center of the shaft hole 12 is denoted as a second connection line, and an comprised angle between the first connection line and the second connection line is the central angle β.

Furthermore, a ratio of polar arc angle α to the central angle β has a great influence on the peak torque, torque pulsation and air-gap magnetic field of the electric motor 20. When β/α is smaller, a waveform distortion rate of the air-gap magnetic field of the electric motor 20 is smaller, and the torque pulsation is lower, but the torque and power of the electric motor 20 are lower, too. When β/α is larger, the waveform distortion of the air-gap magnetic field is greater, and the torque pulsation of the electric motor 20 is higher. Therefore, a proper value of β/α plays an important role in the performance of the electric motor 20. By defining β/α in the above range, optimization of many aspects such as the torque, torque pulsation, and air gap harmonic wave of the electric motor 20 can be achieved. Without changing the torque of the electric motor 20, the proportion of the harmonic waves can be effectively reduced, and the problem of the torque pulsation can be addressed for the electric motor 20.

Furthermore, the arc-shaped sections 110 comprise two second circular arc sections 112, and the two second circular arc sections 112 are connected on two sides of the first circular arc section 111, respectively. In some embodiments, the two second circular arc sections 112 comprise the left arc section 112a and the right arc section 112b, that is, for one magnetic pole of the electric motor 20, the arc-shaped sections 110 comprise the left arc section 112a, the first circular arc section 111, and a right arc section 112b that are connected in sequence. Considering adjacent magnetic poles, the left arc section 112a of a magnetic pole is connected to the right arc section 112b of an adjacent magnetic pole, and the right arc section 112b of a magnetic pole is connected to the left arc section 112a of an adjacent magnetic pole. Furthermore, a center of the second circular arc section 112 does not coincide with the center of the shaft hole 12, that is to say, the peripheral edge of the punching sheet body 11 is formed by combining the first circular arc section 111 concentric with the center of the shaft hole 12 and the second circular arc section 112 eccentric with the center of the shaft hole 12; therefore, an unequal air gap periodically varying along a circumferential direction can be formed between an outer circumference circle of the rotor and an inner circumference circle of the stator 21 for the electric motor 20, and accordingly, the left arc section 112a, the first circular arc section 111, and then the right arc section 112b can alternate on an outer circumference circle of the rotor punching sheet 10 and then the operation of the electric motor 20 can be more stable. Moreover, the distribution of a magnetic field of the rotor is optimized, and a Q-axis and D-axis armature reaction is effectively weakened, which effectively addresses the problem of the torque pulsation of the electric motor 20 while keeping a peak torque of the electric motor 20 unchanged; as such, the vibration noise of the electric motor 20 in operation is reduced, rendering a better user experience. In addition, the stator 21 and the rotor of the electric motor 20 suffer from less iron loss, which is beneficial to improve the efficiency of the electric motor 20. Furthermore, the combination of the first circular arc section 111 and the second circular arc section 112 takes into account the advantages of both a full-circle design and a completely eccentric design of the rotor punching sheet 10. With an average length of the air gap of the electric motor 20 unchanged and the peak torque of the electric motor 20 unchanged, an air-gap magnetic field is effectively improved and then an air-gap magnetic density and a sinusoidal degree of a counter electromotive force waveform are increased; a proportion of harmonic waves is reduced, for reducing the torque pulsation, and significantly reducing the vibration noise of the electric motor 20.

Embodiment 6

According to a third aspect of the present application, a rotor is provided, comprising the rotor iron core provided by any of the above designs, where the rotor further comprises a plurality of permanent magnets, each of the plurality of permanent magnets being inserted in the plurality of insertion slots.

The rotor provided by the present application comprises the rotor iron core provided by any of the above designs, and thus has all the advantageous effects of the rotor iron core, which will not be described in detail herein.

Embodiment 7

According to a fourth aspect of the present application, an electric motor 20 is provided, comprising the rotor provided by any of the above designs, where the electric motor 20 further comprises a stator 21, the stator 21 comprising a mounting cavity extending axially therethrough, the rotor being located within the mounting cavity.

The electric motor 20 provided by the present application comprises the rotor provided by any of the above designs, and thus has all the advantageous effects of the rotor, which will not be described in detail herein.

In some embodiments, the rotor punching sheet 10 in the rotor comprises the punching sheet body 11, the shaft hole 12 provided on the punching sheet body 11, and a plurality of slot groups 13. The plurality of slot groups 13 are provided on the punching sheet body 11, each slot group 13 comprises at least one magnetic slot, each magnetic slot comprises two magnet slots 130, each magnet slot 130 comprises a first slot end 1311 and a second slot end 1312 on an axial end face, and the first slot end 1311 is arranged closer to the shaft hole 12 than the second slot end 1312.

Herein, a peripheral edge of the punching sheet body 11 comprises a peripheral section on the axial end face, the peripheral section comprises a plurality of connected arc-shaped sections 110 corresponding to the plurality of slot groups 13, each arc-shaped section 110 comprises a first circular arc section 111 concentric with the shaft hole 12 Furthermore, either of the two magnet slots 130 comprises a straight slot section 1313 connected between the first slot end 1311 and the second slot end 1312 and closer to another of the two magnet slots 130, the straight slot section 1313 comprises a distal end away from the shaft hole 12, lines connecting the distal ends of the two magnet slots 130 to a center of the shaft hole 12, respectively, form a polar arc angle α, and a central angle of the first circular arc section 111 is β, and $0.35 \leq \dfrac{\beta}{\alpha} \leq 1$. Furthermore, the arc-shaped sections 110 comprise two second circular arc sections 112, and the two second circular arc sections 112 are connected on both sides of the first circular arc section 111, respectively. The center of the second circular arc section 112 does not coincide with the center of the shaft hole 12. The present application takes into account the advantages of both a full-circle design and a completely eccentric design of the rotor punching sheet 10. With an average length of the air gap of the electric motor 20 unchanged and the peak torque of the electric motor 20 unchanged, an air-gap magnetic field is effectively improved and then an air-gap magnetic density and a sinusoidal degree of a counter electromotive force waveform are increased; a proportion of harmonic waves is reduced, for reducing the torque pulsation, and significantly reducing the vibration noise of the electric motor 20. The full circle design of the rotor punching sheet 10 means that the outer peripheral section of the punching sheet body 11 of the rotor punching sheet 10 is a full circle. The completely eccentric design of the rotor punching sheet 10 means that the outer peripheral section of the punching sheet body 11 of the rotor punching sheet 10 comprises a plurality of connected circular arc sections, and the center of the circle on which each circular arc section is located does not coincide with the center of the shaft hole 12.

Furthermore, as shown in FIG. 5, a minimum spacing between an outer peripheral wall of the rotor and an inner peripheral wall of the stator 21 is H1, and a maximum spacing between the outer peripheral wall of the rotor and the inner peripheral wall of the stator 21 is H2, where 0.15 mm≤H2-H1≤0.35 mm.

In this design, the minimum spacing between the outer peripheral wall of the rotor and the inner peripheral wall of the stator 21 is H1. In some embodiments, there is a minimum spacing H1 between a point on the first circular arc section 111 of the rotor punching sheet 10 and the inner peripheral wall of the stator 21, because as shown in FIG. 4, the radius of the circle on which the first circular arc section 111 of the rotor punching sheet 10 is located is larger, that is, a distance L1 between a point on the first circular arc section 111 and the center of the shaft hole 12 is larger. The maximum distance between the peripheral wall of the rotor and the inner peripheral wall of the stator 21 is H2. In some embodiments, there is a maximum distance between a point on the second circular arc section 112 of the rotor punching sheet 10 and the inner peripheral wall of the stator 21, because a distance L2 between a point on the second circular arc section 112 of the rotor punching sheet 10 and the center of the shaft hole 12 is smaller, that is, L2 is smaller than L1. Given that a radius of a projection of the inner peripheral wall of the stator 21 on the axial end face is R (i.e., a radius of an inner circle of the stator 21), then the minimum spacing H1=R-L1, and the maximum spacing H2=R-L2, hence H2 is greater than H1.

In some embodiments, a difference between H1 and H2 not only directly determines an equivalent air gap length of the electric motor 20 and affects the air-gap magnetic field distribution, but also directly determines a salient pole ratio of the electric motor 20 and affects the peak torque and high-speed performance of the electric motor 20. In some embodiments, the torque pulsation of the electric motor 20 mainly depends on the 5th, 7th, 11th and 13th harmonic waves of the air-gap magnetic field. In the case of a larger difference between H1 and H2, the air-gap magnetic field waveform is more sinusoidal, a harmonic wave amplitude of the electric motor 20 is smaller, and the torque pulsation is lower, but the peak torque of the electric motor 20 is also lower. The peak torque of the electric motor 20 consists of the reluctance torque component and a permanent magnet torque component, where the permanent magnet torque of the electric motor 20 is proportional to an amount of the permanent magnet, and the reluctance torque is proportional to the saliency ratio. Herein, the saliency ratio is a ratio of the Q-axis inductance to the D-axis inductance and is directly related to the difference between H1 and H2. Under the condition that the amount of the permanent magnet is constant, a proper distribution of the difference between H1 and H2 ensures that the equivalent air gap length of the electric motor 20 keeps unchanged and the salient ratio of the electric motor 20 does not change, for ensuring that the peak torque of the electric motor 20 does not change. Therefore, a solution allowing for a smaller proportion of harmonic waves, a lower torque pulsation, and better electromagnetic performance can be achieved under the same peak torque. In some embodiments, the value of H2-H1 may be 0.15 mm, 0.20 mm, 0.25 mm, 0.30 mm, 0.35 mm, etc.

Furthermore, as shown in FIGS. 1, 4 and 5, the number of magnetic poles of the electric motor 20 is P, a maximum distance between the center of the shaft hole 12 in the rotor punching sheet 10 of the electric motor 20 and the peripheral edge of the punching sheet body 11 is L1, a minimum distance between the center of the shaft hole 12 and the peripheral edge of the punching sheet body 11 is L2, and a radius of an arc where the center of the second circular arc section 112 of the rotor punching sheet 10 is located is r, where r satisfies the following equation: r=L1-L2.

In this design, the number of magnetic poles of the electric motor 20 is P, the maximum distance between the center of the shaft hole 12 in the rotor punching sheet 10 of the electric motor 20 and the peripheral edge of the punching sheet body 11 is L1, the minimum distance between the center of the shaft hole 12 and the peripheral edge of the punching sheet body 11 is L2, and the radius of the arc where the center of the second circular arc section 112 of the rotor punching sheet 10 is located is r, where r satisfies the above equation. As such, the center of the eccentric circular arc section in the second circular arc section 112 is located in the circle taking the center of the shaft hole 12 as the center and r as the radius. Apparently, the center of the second circular arc section 112 cannot coincide with the center of the shaft hole 12. By defining a position of the center of the eccentric circular arc section, the combination of the concentric first circular arc section 111 and the eccentric second circular arc section 112 is thus more reasonable, and takes into account the advantages of both a full-circle design and a completely eccentric design of the rotor punching sheet. With an average length of the air gap of the electric motor unchanged and the peak torque of the electric motor unchanged, an air-gap magnetic field is effectively improved and then an air-gap magnetic density and a sinusoidal degree of a counter electromotive force waveform are increased; a proportion of harmonic waves is reduced, for reducing the torque pulsation, and significantly reducing the vibration noise of the electric motor.

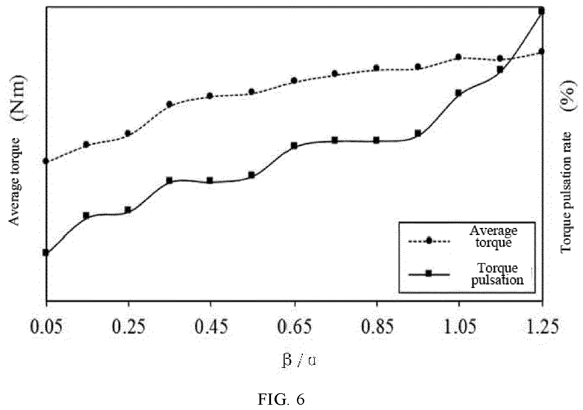

In a specific embodiment, taking an 8-pole 48-slot electric motor 20 as an example, the rotor punching sheet 10 comprises two first auxiliary slots 141 and two second auxiliary slots 142, and the magnetic slots comprise the first magnetic slot 1301 and the second magnetic slot 1302 arranged in a V-shape; once a value of $\alpha$ is determined, taking $\alpha$ = 16 ° in this example, and under the condition that other parameters of the electric motor 20 are unchanged, the value taken for $\beta/\alpha$ may be 0.05, 0.15, 0.25, 0.35, 0.45, 0.55, 0.65, 0.75, 0.85, 0.95, 1.05, 1.15, and 1.25. As shown in FIG. 6, curves of the average peak torque and torque pulsation rate of the electric motor 20 as a function of $\beta/\alpha$ are given, and it can be seen that when the value of $\beta/\alpha$ is in the range from 0.35 to 1, the peak torque and torque pulsation rate of the electric motor 20 are both at an optimal level.

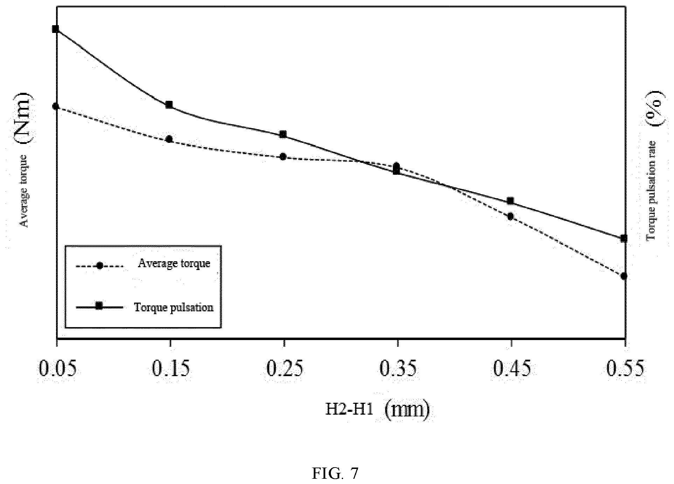

In addition, under the same condition of keeping other parameters of the electric motor 20 unchanged, a difference between H1 and H2 is changed, where H2=0.65 mm is taken, and the difference between H1 and H2 is 0.05 mm, 0.15 mm, 0.25 mm, 0.35 mm, 0.45 mm and 0.55 mm. In FIG. 7, curves of the average peak torque and the torque pulsation rate as a function of the difference between H2 and H1 are shown, and it can be seen that when the value of H2-H1 is in the range from 0.15 mm to 0.35 mm, the peak torque and the torque pulsation rate of the electric motor 20 are both at an optimal level.

Furthermore, in the case that the ratio of $\beta$ to $\alpha$ satisfies $0.35 \leq \beta/\alpha < 1$ and the difference between H2 and H1 ranges from 0.15 mm to 0.35 mm, a combination of $\beta$, H1, and H2 is reasonably selected within the range. In some embodiments, in this embodiment, the parameters are given as follows: $\alpha$=16°, $\beta$=13°, H1=0.7 mm, and H2=0.9 mm, and Table 1 below is a table of electromagnetic parameters of the electric motor 20 at the peak torque point. It can be seen from Table 1 that, compared with the full-circle design of the rotor, the technical means of the present application reduces the waveform distortion rate of the air-gap magnetic density of the electric motor 20 without changing the average air gap length of the electric motor 20 or changing the peak torque of the electric motor 20, which lowers the torque pulsation of the electric motor 20, for effectively improving the torque performance and solving the problem of the vibration noise for the electric motor 20.

Table 1

| Electromagnetic parameter | Conventional full-circle design | Design of the present application |
|---|---|---|
| Equivalent air gap length (mm) | 0.75mm | 0.75mm |
| Magnetic density waveform distortion (%) | 26.6% | 18.7% |
| Average electromagnetic torque (Nm) | 391.6 | 391.4 |
| Torque pulsation rate (%) | 4.7% | 3.15% |

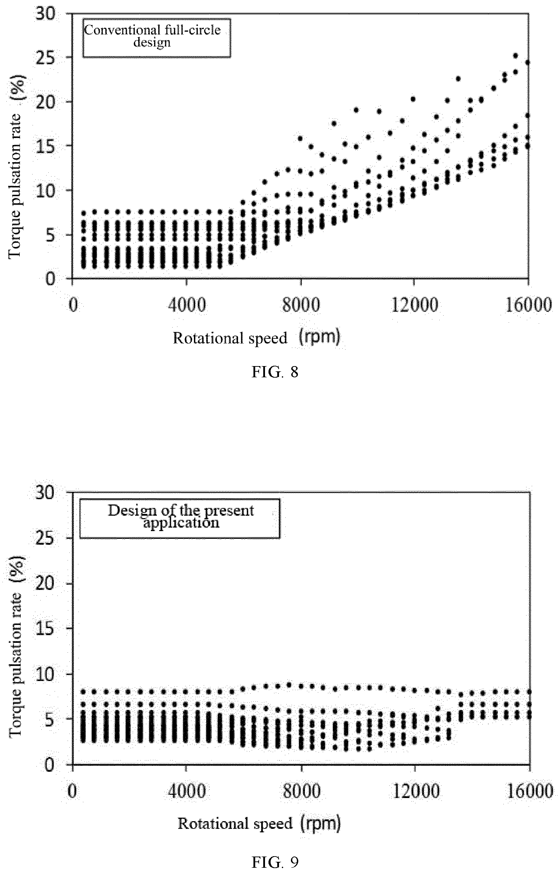

FIG. 8 is a graph of the torque pulsation distribution for the electric motor at full speed in the conventional full-circle design, and FIG. 9 is a graph of the torque pulsation distribution for the electric motor 20 at full speed in the present application. It can be seen from the comparison that the torque pulsation at full speed decreases, where the torque pulsation at 8000 rpm to 16000 rpm decreases significantly, with a maximum decrease of 87.5%, and thus the torque pulsation at high speed is controlled under 8.5%.

Embodiment 8

According to a fifth aspect of the present application, a vehicle is provided, comprising the electric motor 20 provided by any of the above designs.

The vehicle provided by the present application comprises the electric motor 20 provided by any of the above designs, and thus has all the advantageous effects of the electric motor 20, which will not be described in detail herein.

It is to be noted that the vehicle may be a new energy vehicle. New energy vehicles comprise pure electric vehicles, extended-range electric vehicles, hybrid electric vehicles, fuel cell electric vehicles, hydrogen engine vehicles, etc. Furthermore, the electric motor 20 provided by any of the above designs may be used as a drive electric motor for the vehicle. In some embodiments, the drive electric motor alone can start functional devices of the vehicle. In some embodiments, the drive electric motor may cooperate with other drive devices on the vehicle to achieve proper operation of functional devices on the vehicle. Herein, the functional device of the vehicle may be any one or any combination of a wheel, an air conditioner, a light assembly, and others.

In this disclosure, the term "plurality" refers to two or more than two unless explicitly defined otherwise. The terms like "mounted", "connected", "coupled", and "fixed" are to be construed broadly, e.g., being "connected" may be through a fixed connection, a detachable connection, or an integral connection; being "coupled" may be either directly coupled or indirectly coupled through an intermediary. For a person of ordinary skill in the art, the specific meaning of the above terms in the present application can be understood according to specific situations.

In the description, references to "an embodiment", "some embodiments", "specific embodiments", and the like, mean that a particular feature, structure, material, or characteristic described in connection with the embodiment or example is comprised in at least one embodiment or example of the present application. In this description, schematic representations of the above terms do not necessarily refer to the same embodiment or example. Furthermore, the particular features, structures, materials, or characteristics described may be combined in any suitable manner in any one or more embodiments or examples.

While the foregoing is directed to the preferred embodiments of the present application, other and further embodiments of the present disclosure may be devised without departing from the basic scope thereof, and the scope thereof is defined by the appended claims. All changes, equivalents, improvements, and the like, that come within the spirit and scope of the present disclosure are intended to be embraced therein.

**Claims**

1. A rotor punching sheet, comprising:

   a punching sheet body;
   a shaft hole provided on the punching sheet body;
   a plurality of slot groups provided on the punching sheet body, each of the plurality of slot groups comprising at least one magnetic slot, every magnetic slot comprising two magnet slots, each of the magnet slots comprising a first slot end and a second slot end on an axial end face, the first slot end being arranged closer to the shaft hole than the second slot end;
   wherein a peripheral edge of the punching sheet body comprises a peripheral section on the axial end face, the peripheral section comprising a plurality of connected arc-shaped sections corresponding to the plurality of slot groups, each of the arc-shaped sections comprising at least a first circular arc section concentric with the shaft hole and a second circular arc section eccentric with the shaft hole.

2. The rotor punching sheet according to claim 1, wherein
   either of the two magnet slots comprises a straight slot section connected between the first slot end and the second slot end and closer to another of the two magnet slots, the straight slot section comprises a distal end away from the shaft hole, lines connecting the distal ends of the two magnet slots to a center of the shaft hole, form a polar arc angle $\alpha$, and a central angle of the first circular arc section is $\beta$, wherein $0.35 \leq \dfrac{\beta}{\alpha} \leq 1$.

3. The rotor punching sheet according to claim 2, wherein
   the number of the second circular arc sections is two, and the two second circular arc sections are respectively connected on two sides of the first circular arc section.

4. The rotor punching sheet according to claim 3, wherein
   the second circular arc section comprises at least one eccentric circular arc section.

5. The rotor punching sheet according to claim 3, wherein

the number of the magnetic slots is two, the first slot ends of the two magnet slots of each magnetic slot are close to each other, and the second slot ends of the two magnet slots of each magnetic slot are away from each other;

the two magnetic slots comprise a first magnetic slot and a second magnetic slot, the first magnetic slot is arranged closer to the shaft hole than the second magnetic slot, and the second magnetic slot forms the polar arc angle $\alpha$, where the first magnetic slot and the second magnetic slot are symmetrical with respect to a center line of a magnetic pole where they are.

**6.** The rotor punching sheet according to claim 5, wherein
an included angle formed by extension lines of the straight slot sections of the two magnet slots in the first magnetic slot is a first opening angle, an included angle formed by the extension lines of the straight slot sections of the two magnet slots in the second magnetic slot is a second opening angle, and the first opening angle is not equal to the second opening angle.

**7.** The rotor punching sheet according to claim 6, wherein
the first opening angle is smaller than the second opening angle.

**8.** The rotor punching sheet according to any of claims 3 to 7, wherein

the first circular arc section is symmetrical with respect to a center line of a magnetic pole where the first circular arc section is;
the two second circular arc sections are symmetrical with respect to a center line of a magnetic pole where they are.

**9.** The rotor punching sheet according to any of claims 1 to 7, wherein

lengths of the first circular arc sections of the plurality of arc-shaped sections are equal;
radii of circles on which the first circular arc sections of the plurality of arc-shaped sections are located are equal.

**10.** The rotor punching sheet according to any of claims 3 to 7, wherein
a center of the second circular arc section is located on the punching sheet body.11. The rotor punching sheet according to any of claims 3 to 7, wherein the slot group further comprises:
an auxiliary slot provided on the peripheral edge of the punching sheet body.

**12.** The rotor punching sheet according to claim 11, wherein
the auxiliary slots are provided in plurality, the plurality of auxiliary slots are arranged at an interval, and the plurality of the auxiliary slots are symmetrically arranged along a center line of a magnetic pole where the plurality of the auxiliary slots are.

**13.** The rotor punching sheet according to claim 12, wherein the auxiliary slots comprise:

two first auxiliary slots, the two first auxiliary slots being symmetrically arranged on the first circular arc section along the center line of the magnetic pole where the two first auxiliary slots are; and/or
two second auxiliary slots, the two second auxiliary slots being symmetrically arranged on the second circular arc section along the center line of the magnetic pole where the two second auxiliary slots are.

**14.** The rotor punching sheet according to claim 13, wherein

a slot depth of the first auxiliary slot is greater than or equal to 0.5 mm and less than or equal to 0.9 mm; and/or
a slot depth of the second auxiliary slot is greater than or equal to 0.1 mm and less than or equal to 0.7 mm.

**15.** A rotor iron core, comprising a rotor punching sheet according to any of claims 1 to 14, wherein the rotor punching sheets are provided in plurality, the plurality of rotor punching sheets are stacked, and a plurality of slot groups of the plurality of rotor punching sheets are axially aligned to form a plurality of insertion slots.

**16.** A rotor, comprising a rotor iron core according to claim 15; and
a plurality of permanent magnets respectively inserted in the plurality of insertion slots.

**17.** An electric motor, comprising a rotor according to claim 16; and
a stator comprising a mounting cavity extending axially therethrough, the rotor being located within the mounting cavity.

**18.** The electric motor according to claim 17, wherein
a minimum spacing between an outer peripheral wall of the rotor and an inner peripheral wall of the stator is H1, and a maximum spacing between the outer peripheral wall of the rotor and the inner peripheral wall of the stator is H2, where 0.15 mm≤H2-H1≤0.35 mm.

**19.** The electric motor according to claim 17, wherein
a number of magnetic poles of the electric motor is P, a maximum distance between a center of a shaft hole in a rotor punching sheet of the electric motor and a peripheral edge of the punching sheet body is L1, a minimum distance between the center of the shaft hole and the peripheral edge of the punching sheet body is L2, and a radius of an arc where a center of a second circular arc section of the rotor punching sheet is located is r, where r=L1-L2.

**20.** A vehicle, comprising:
an electric motor according to any of claims 17 to 19.

FIG. 1

FIG. 2

A

11

1301

FIG. 3

FIG. 4

FIG. 5

FIG. 6

FIG. 7

FIG. 8

FIG. 9

## INTERNATIONAL SEARCH REPORT

| | International application No. |
|---|---|
| | **PCT/CN2021/107044** |

### A. CLASSIFICATION OF SUBJECT MATTER

H02K 1/22(2006.01)i;  H02K 1/27(2006.01)i;  H02K 1/28(2006.01)i

According to International Patent Classification (IPC) or to both national classification and IPC

### B. FIELDS SEARCHED

Minimum documentation searched (classification system followed by classification symbols)

H02K

Documentation searched other than minimum documentation to the extent that such documents are included in the fields searched

Electronic data base consulted during the international search (name of data base and, where practicable, search terms used)

CNABS; CNTXT; CNKI; VEN; WOTXT; EPTXT; USTXT: 威灵, 格力, 转子, 冲片, 叠片, 气隙, 不对称, 不等, 不同, 非对称, 不均匀, 非均匀, 圆心, 不同心, rotor, sheet, air gap, asymmetrically, asymmetry, non-isometric, disalignment

### C. DOCUMENTS CONSIDERED TO BE RELEVANT

| Category* | Citation of document, with indication, where appropriate, of the relevant passages | Relevant to claim No. |
|---|---|---|
| X | CN 112234735 A (GREE ELECTRIC APPLIANCES, INC. OF ZHUHAI) 15 January 2021 (2021-01-15)<br>    description, paragraphs [0021]-[0030], and figures 1-4 | 1-20 |
| X | CN 105576867 A (ZHUHAI GREE ENERGY SAVING REFRIGERATION TECHNOLOGY RESEARCH CENTER CO., LTD.) 11 May 2016 (2016-05-11)<br>    description, paragraphs [0025]-[0038], and figures 1-5 | 1-20 |
| A | CN 102738993 A (FUJIAN YANAN ELECTRIC MACHINE CO., LTD.) 17 October 2012 (2012-10-17)<br>    entire document | 1-20 |
| A | CN 106972665 A (CHANGZHOU JIAXUAN CNC EQUIPMENT CO., LTD.) 21 July 2017 (2017-07-21)<br>    entire document | 1-20 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 October 2021** | **19 October 2021** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/107044**

| Patent document cited in search report | | | Publication date (day/month/year) | Patent family member(s) | | | Publication date (day/month/year) |
|---|---|---|---|---|---|---|---|
| CN | 112234735 | A | 15 January 2021 | CN | 213367500 | U | 04 June 2021 |
| CN | 105576867 | A | 11 May 2016 | CN | 105576867 | B | 22 March 2019 |
| CN | 102738993 | A | 17 October 2012 | | None | | |
| CN | 106972665 | A | 21 July 2017 | | None | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110122976

- CN 202120251257X